# EUROPÄISCHE PATENTSCHRIFT

(11) **EP 1 679 571 B1**
(45) Veröffentlichungstag und Bekanntmachung des Hinweises auf die Patenterteilung: **02.10.2013**
(21) Anmeldenummer: 05027693.0
(22) Anmeldetag: 17.12.2005
(51) Int. Cl.: G05D 23/02

(54) **Thermostatregler für Heizkörperventile**
Thermostatic control device for radiator valves
Régulateur thermostatique pour robinets de radiateur

(30) Priorität: 23.12.2004 DE 102004063421
(43) Veröffentlichungstag der Anmeldung: 12.07.2006
(73) Patentinhaber: Honeywell Technologies Sarl ECC, 1110 Morges (CH)
(72) Erfinder: Kottek, Günter, 44534 Lünen (DE)
(74) Vertreter: Graefe, Jörg

(56) Entgegenhaltungen:
- EP-A- 1 388 715
- DE-A1- 2 428 511
- DE-A1-102004 004 636
- DE-U1- 8 535 987

## Beschreibung

Die vorliegende Erfindung betrifft einen Thermostatregler für Heizkörperventile umfassend einen Thermostatkopf mit einem an einer heizkörperseitigen Armatur drehfest montierbaren Sockel, wobei der Thermostatkopf als Griff ausgebildet und gegenüber dem Sockel zur Einstellung einer gewünschten Temperatur verdrehbar angeordnet ist, wobei die Befestigung des Sockels an der heizkörperseitigen Armatur mittels eines Überwurfelements erfolgt.

Thermostatregler für Heizkörperventile der eingangs genannten Gattung sind aus dem Stand der Technik bekannt. Beispielsweise beschreibt die DE 100 07 929 B4 ein Thermostatventil für Heizkörper der vorgenannten Art, bei dem als Überwurfelement eine Überwurfmutter vorgesehen ist, die auf ein entsprechendes Außengewinde einer heizkörperseitigen Armatur aufschraubbar ist. Beispielsweise befindet sich am Vorlauf des Heizkörpers ein T-Stück mit einem entsprechenden Gewinde, auf das die Überwurfmutter zur Festlegung des Sockels des Thermostatventils aufgeschraubt wird. Der Thermostatkopf wird gegenüber dem Sockel verdreht, um eine gewünschte Temperatur einzustellen. Die meisten handelsüblichen Thermostatventile werden in dieser Weise über Überwurfmuttern angeschraubt und fixiert. Der Schraubvorgang ist recht zeitaufwändig.

Eine einfachere und zügigere Montage an der heizkörperseitigen Armatur ist mit einem Thermostatregler möglich wie er in dem Dokument EP1 388 715 A1 offenbart ist. Bei dem in diesem Dokument offenbarten Thermostatregler ist vorgesehen, dass zur heizkörperseitigen Festlegung des Sockels an der heizkörperseitigen Armatur mittels des Überwurfelements eine gewindelose Verbindung zwischen Überwurfelement und Sockel dient. Der in dem Dokument EP 1 388 715 A1 offenbarte Thermostatregler hat den Nachteil, dass durch ein einfaches Verschieben des Überwurfelementes die Verbindung zwischen dem Thermostatregler und der Armatur gelöst werden kann. Insbesondere ist ein irrtümliches Lösen der Verbindung beim Putzen oder dergleichen nicht ausgeschlossen.

Vor diesem Hintergrund lag der Erfindung die Aufgabe zugrunde, eine Verbindung beziehungsweise Verriegelung des Überwurfelementes zum Sockel vorzuschlagen, die gegenüber unbeabsichtigten Lösen gesichert ist.

Diese Aufgabe wird erfindungsgemäß dadurch gelöst, dass zur Festlegung des Sockels an der heizkörperseitigen Armatur zunächst eine Axialverschiebung des Überwurfelementes, vorzugsweise in Richtung auf das Sockelende und anschließend eine Drehung des Überwurfelementes erforderlich ist,

Anstelle der bisherigen Verbindung über eine Überwurfmutter wird vorzugsweise ein Überwurfelement verwendet, welches als gewindeloser Ring ausgebildet ist. Vorzugsweise ist dieses Überwurfelement auf einem endseitigen Abschnitt des Sockels axial verschiebbar, um so den Sockel an der heizkörperseitigen Armatur festzulegen. Insbesondere ist vorgesehen, dass das Überwurfelement auf dem Sockel axial verschiebbar und gegenüber dem Sockel verdrehbar ist, vorzugsweise um einen Bruchteil einer vollständigen Umdrehung. Bei der erfindungsgemäßen Lösung kann das Gewinde auf dem Sockel des Thermotatreglers entfallen. Der Sockel kann beispielsweise am äußeren Umfang zylindrisch ausgebildet sein. Das Überwurfelement ist vorzugsweise eine Art Schiebering, der zur Arretierung des Thermostatkopfs an der heizkörperseitigen Armatur vorzugsweise zunächst axial verschoben und danach verdreht wird, vorzugsweise um einen Bruchteil einer Umdrehung. Die erfindungsgemäße Lösung hat somit den Vorteil, dass der Zeitaufwand für die Montage erheblich reduziert werden kann. Anstelle des bislang üblichen Schraubvorgangs wird lediglich der Schiebering axial verschoben und dann verdreht, so dass sich dann quasi eine Verriegelungsposition ergibt, in der eine spielfreie feste Verbindung zwischen Sockel des Thermostatkopfs und heizkörperseitiger Armatur gegeben ist.

Gemäß einer bevorzugten Weiterbildung der erfindungsgemäßen Aufgabenlösung weist das Überwurfelement innenliegende Führungselemente auf, die insbesondere in Nuten des Sockels geführt sind. Diese Nuten führen damit das als Schiebering ausgeführte Überwurfelement und geben bei der Montage nur einen vorgegebenen Weg zur Arretierung des Sockels frei.

Das als Schiebering ausgebildete Überwurfelement ist vom Durchmesser auf den Sockel abgestimmt. Gemäß einer möglichen konstruktiven Variante weist der Sockel mindestens ein angeformtes Fußteil, vorzugsweise zwei Fußteile auf, die bei axialer Verschiebung des Überwurfelements eine formschlüssige Verbindung mit einem Abschnitt der heizkörperseitigen Armatur eingehen. Die genannten Fußteile können beispielsweise Anformungen oder zum Beispiel trapezförmige Hintergriffe für eine formschlüssige Verbindung mit der heizkörperseitigen Armatur aufweisen. Weiterhin kann man beispielsweise an dem als Schiebering ausgebildeten Überwurfelement innenseitig Spannelemente oder Spannbereiche, beispielsweise Spannnocken ausformen, die bei der Festlegung mit den vorgenannten Fußteilen des Sockels in Kontakt treten und der Verbindung zwischen Überwurfelement, Sockel und heizkörperseitiger Armatur das Spiel nehmen, wodurch eine spielfreie feste Verbindung entsteht. Zur Festlegung des Sockels an der heizkörperseitigen Armatur erfolgt vorzugsweise zunächst eine Axialverschiebung des Überwurfelements in Richtung auf das Sockelende und anschließend eine Teildrehung des Überwurfelements in die Verriegelungsstellung.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: einen Längsschnitt durch einen erfindungsgemäßen Thermostatregler für Heizkörperventile;
- Fig. 2: eine perspektivische Ansicht des Sockels;
- Fig. 3: eine Draufsicht auf den Sockel von der Unterseite her gesehen;
- Fig. 4: einen Längsschnitt durch den Sockel entlang der Linie IV-IV von Fig. 5;
- Fig. 5: einen Horizontalschnitt durch den Sockel entlang der Linie V-V von Fig. 4;
- Fig. 6: eine Seitenansicht des Sockels;
- Fig. 7: eine perspektivische Ansicht des Überwurfelements;
- Fig. 8: einen Längsschnitt durch das Überwurfelement entlang der Linie VIII-VIII in Fig. 9;
- Fig. 9: eine Draufsicht auf das Überwurfelement;
- Fig. 10: einen weiteren Längsschnitt durch das Überwurfelement entlang der Linie X-X von Fig. 9;
- Fig. 11: eine Teil-Seitenansicht des Thermostatreglers in der unverriegelten Position des Überwurfelements;
- Fig. 12: eine Seitenansicht des Thermostatreglers in der verriegelten Position des Überwurfelements.

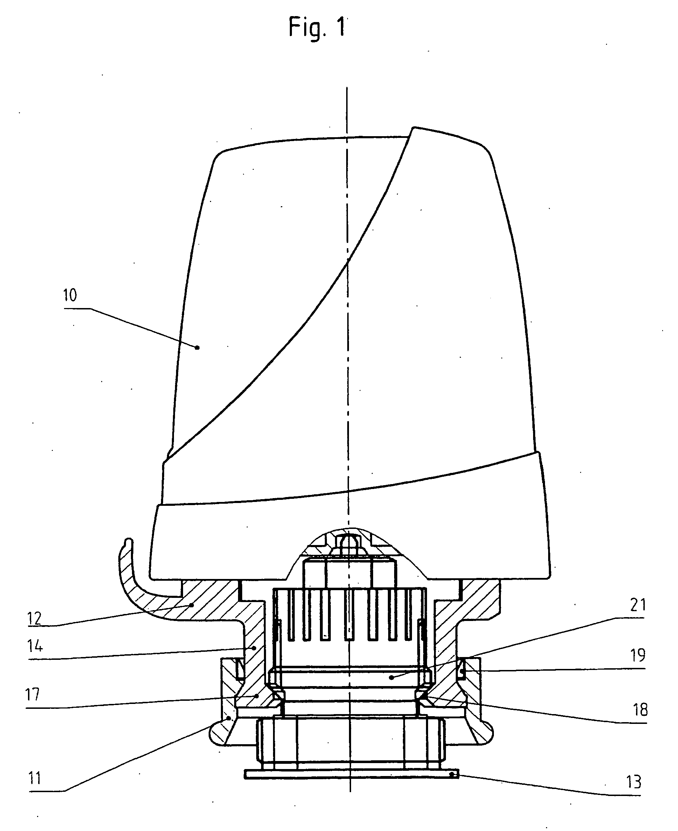

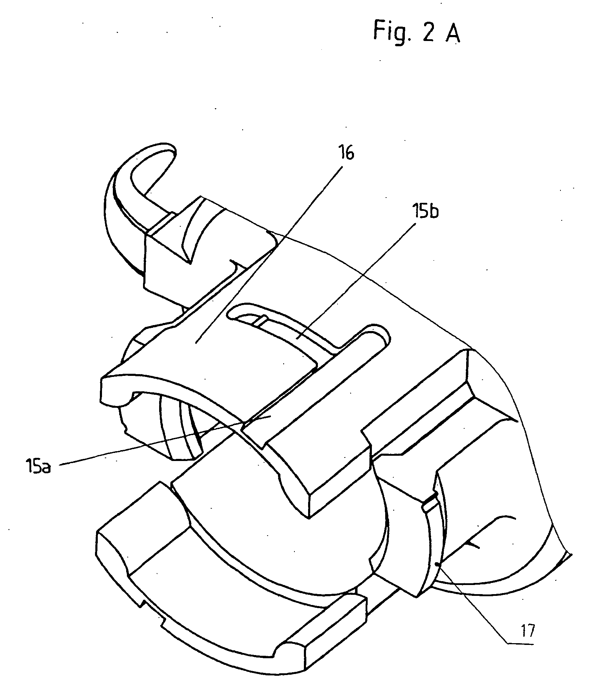

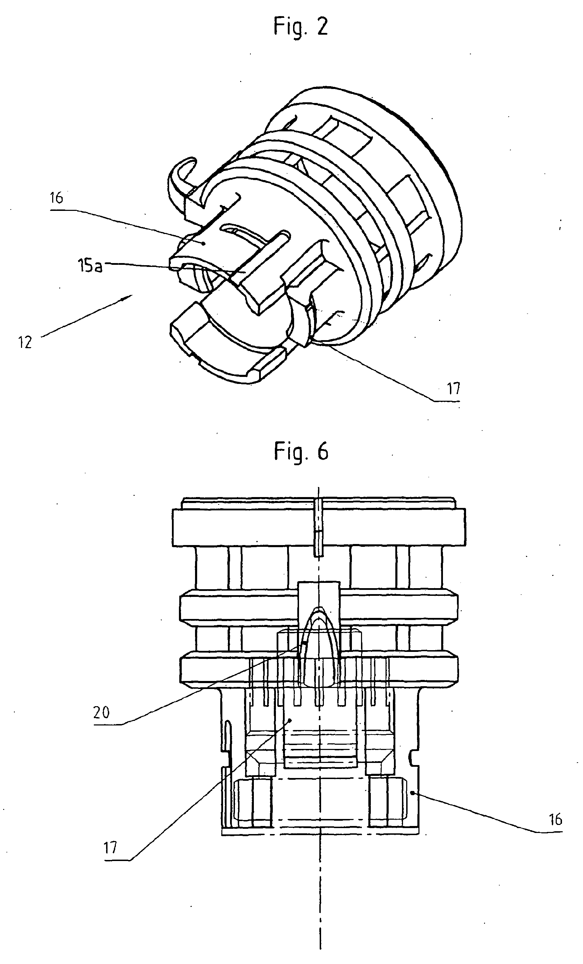

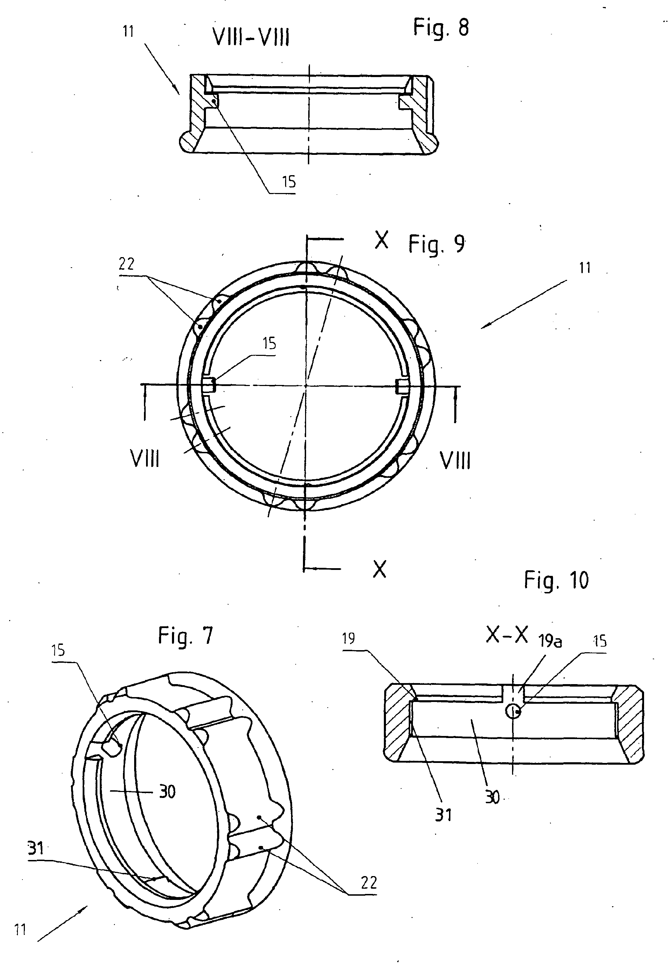

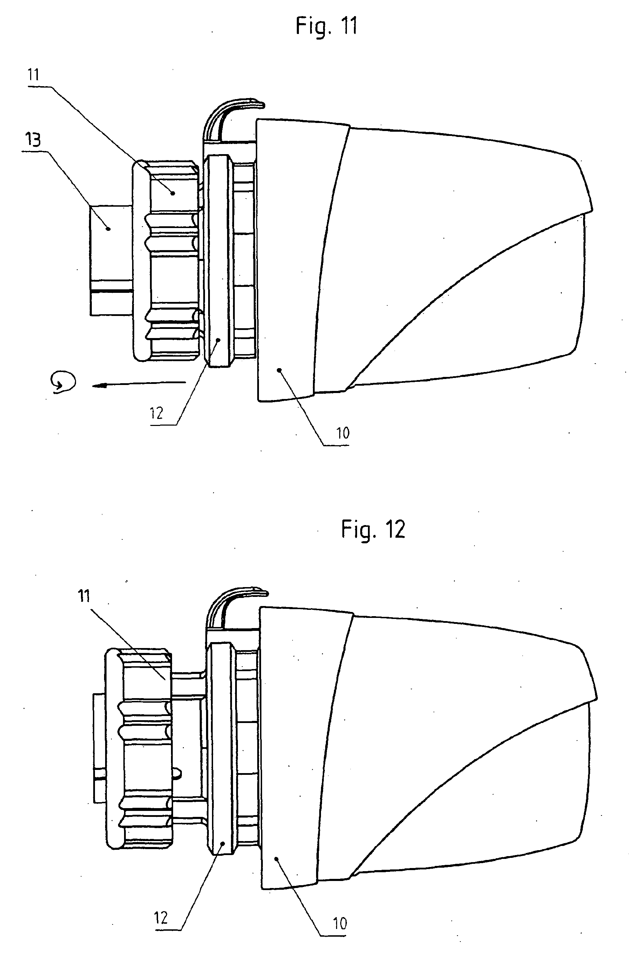

Zunächst wird auf Fig. 1 Bezug genommen. Der erfindungsgemäße Thermostatregler für Heizkörperventile umfasst einen Thermostatkopf 10, der gegenüber einem Sockel 12 zur Einstellung einer gewünschten Temperatur verdrehbar ist. Der Sockel 12 wird bei der Montage an einer heizkörperseitigen Armatur 13, zum Beispiel einem Stutzen eines T-Stücks oder dergleichen drehfest festgelegt. Für diese Festlegung dient ein als Schiebering ausgebildetes Überwurfelement 11, welches einen endseitigen Abschnitt 14 des Sockels 12 übergreift. Fig. 1 zeigt die montierte Endposition, bei der eine formschlüssige, drehfeste Verbindung zwischen Sockel 14, heizkörperseitiger Armatur 13 und Überwurfelement 11 gegeben ist. Nähere Einzelheiten ergeben sich aus der Darstellung der einzelnen Bauelemente gemäß den Fig. 2 und 10. Die Fig. 2 und 6 zeigen Ansichten des Sockels, die Fig. 7 und 10 zeigen Ansichten des Überwurfelements. Die Fig. 11 und 12 verdeutlichen die Vorgehensweise bei der Montage zur Festlegung des Thermostatreglers an der heizkörperseitigen Armatur.

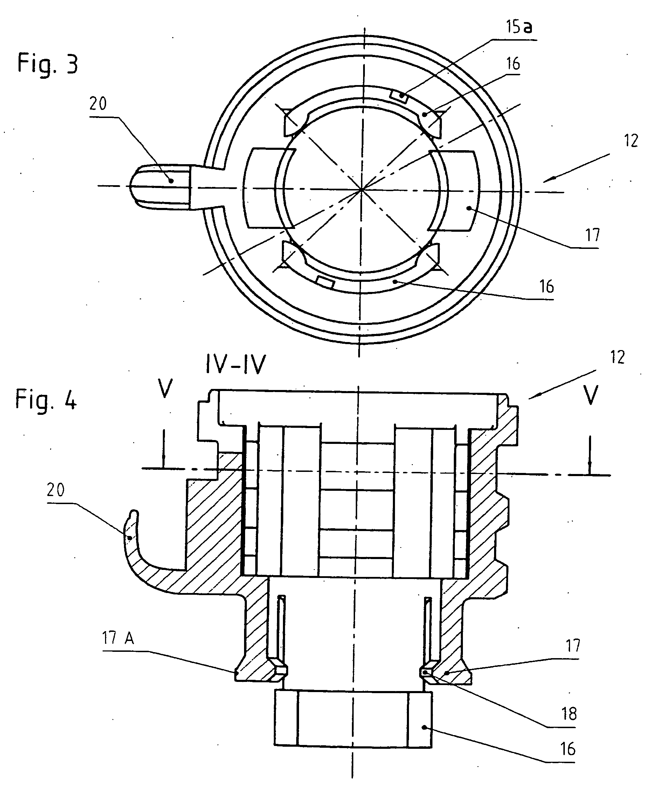

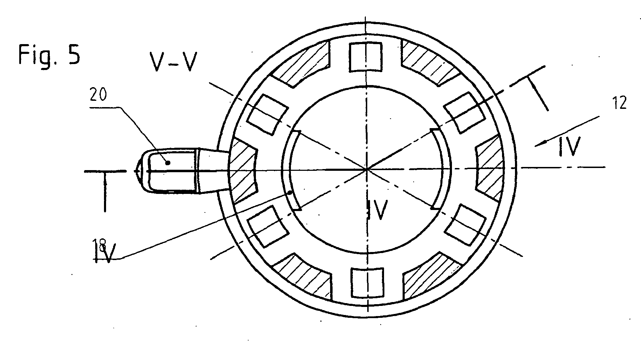

Nachfolgend wird auf die Fig. 2 bis 6 Bezug genommen. Fig. 2 zeigt eine perspektivische Ansicht des Sockels 12, wobei man erkennt, dass es sich im Prinzip um ein ringförmiges Bauteil handelt, vorzugsweise um ein Kunststoffformteil. Man erkennt in Fig. 2 eines der beiden Fußteile 17, die am Umfang des Sockels 12 einander gegenüberliegen sowie den Sockel an dem der heizkörperseitigen Armatur zugewandten Ende verlängernde teilkreisringförmige Anformungen 16, die in der montierten Position einen Teil des Umfangs der heizkörperseitigen Armatur 13 umschließen. Es sind ebenfalls zwei am Umfang einander gegenüberliegende Anformungen 16 vorhanden. Diese Anformungen 16 und die Fußteile 17 kann man auch gut in der Unteransicht des Sockels gemäß Fig. 3 erkennen. An dem Sockel 20 ist weiterhin außenseitig eine Anzeigemarke 20 in Form einer bogenförmig geformten Nase angeformt. Die Anzeigemarke 20 dient der Erkennung der jeweiligen Drehposition des Thermostatkopfs.

Aus Fig. 4 erkennt man, dass die beiden Fußteile 17 des Sockels 12 innenseitig jeweils mindestens eine vorspringende Anformung 18 aufweisen, die in der montierten Position gemäß Fig. 1 einen endseitigen Bund 21 der heizkörperseitigen Armatur hintergreifen, so dass eine formschlüssige Verbindung hergestellt wird. Die beiden Fußteile 17 sind am Sockel 12 freigeschnitten, so dass sie in radialer Richtung eine leicht federnde Bewegung ausführen können. In der in Fig. 1 gezeigten Verriegelungsstellung des Überwurfelements 11 werden die beiden Fußteile radial einwärts gedrückt, so dass die Anformungen 18 den vorgenannten Bund 21 der heizkörperseitigen Armatur 13 hintergreifen. Ein wieder Lösen der Verbindung ist dabei nicht möglich, da ein axiales Hochschieben des Überwurfelements 11 durch das zuvor zur Verriegelung erfolgte Verdrehen des Überwurfelements in dieser Position nicht möglich ist.

Nachfolgend wird die Ausbildung des Überwurfelements 11 unter Bezugnahme auf die Fig. 7 bis 10 näher erläutert. Fig. 7 zeigt eine perspektivische Ansicht des Überwurfelements 11, aus der man erkennen kann, dass an diesem innenseitig radial vorstehende Nocken 15 angeformt sind, die als Führungselemente bei der axialen Verschiebebewegung und beim Verdrehen des Überwurfelements 11 gegenüber dem Sockel 12 dienen. Fig. 8 zeigt, dass zwei am Umfang einander gegenüberliegende Nocken 15 vorhanden sind. In der Schnittansicht gemäß Fig. 10 kann man ebenfalls einen der beiden Nocken 15 erkennen. Fig. 8 zeigt eine weitere Schnittansicht entlang der Linie VIII-VIII von Fig. 9, bei der durch den Bereich der beiden Nocken 15 geschnitten wurde. Fig. 9 zeigt die Draufsicht. Außenseitig sind an dem Überwurfelement 11 am Umfang achsparallel verlaufende Rippen 22 angeformt, um bei der Montage das Verdrehen des Überwurfelements 11 gegenüber dem Sockel 12 zu erleichtern.

Die Innenkontur des Überwurfelements 11 ist insgesamt aus den Figuren 10 und 7 erkennbar sowie auch aus Fig. 9. Man erkennt, dass die beiden Nocken 15 innenseitig am Umfang vorstehen und im übrigen das Überwurfelement 11 innenseitig über einen größten Teil seines Umfangs in einem axialen Teilabschnitt 30 zylindrisch und glatt ausgebildet ist. In dem einen Endbereich des Überwurfelements 11, der sich in der Zeichnung gemäß Fig. 10 oben befindet und in der Montageposition dem Thermostatkopf 10 zugewandt ist, befindet sich ein ringförmiger, im Querschnitt hakenförmig ausgebildeter Bund 19, der allerdings in dem Bereich 19a oberhalb des Nockens 15 ausgespart ist. Wie man aus Fig. 1 erkennt, hintergreift der Bund 19 eine äußere Schräge der beiden Fußteile 17 des Sockels in der Befestigungsposition.

Die beiden Fig. 11 und 12 zeigen jeweils Seitenansichten mit Thermostatkopf 10, Überwurfelement 11 und Sockel 12, wobei Fig. 11 die entsprechende Position des Überwurfelements 11 vor der Montage zeigt. Aus dieser Position heraus wird das als Schiebering ausgebildete Überwurfelement 11 zunächst in Pfeilrichtung axial zum Ende des Sockels hin verschoben, wobei die beiden Nocken 15 des Überwurfelements axial in den Nuten 15a des Sockels 12 geführt sind. Diese axialen Nuten 15a kann man in den Figuren 2 und insbesondere auch in der vergrößerten Detaildarstellung gemäß Fig. 2a gut erkennen. Aus Fig. 2a kann man auch entnehmen, dass die axiale Nut 15a mit einer Umfangsnut 15b in der Anformung 16 des Sockels in Verbindung steht. Nach der axialen Verschiebebewegung erfolgt ein Verdrehen des Überwurfelements 11 gegenüber dem Sockel 12, um beispielsweise etwa 1/8 Umdrehung. Bei dieser Verdrehbewegung bewegen sich dann die beiden Nocken 15 in der Umfangsnut 15b (siehe Fig. 2a). An den beiden Fußteilen 17 ist jeweils die untere äußere Umfangsfläche, die man in Fig. 2a erkennen kann, als schiefe Ebene ausgebildet. Dadurch wird beim Verdrehen des Überwurfelements 11 durch dessen Innenfläche 30 (siehe Fig. 10) eine zunehmende radiale Pressung auf die Fußteile 17 ausgeübt (siehe auch Fig. 1), was die Fußteile 17 radial einwärts zwingt, wodurch eine spielfreie feste Verbindung mit der heizkörperseitigen Armatur hergestellt wird. Die Umfangsnuten 15b sorgen für eine Führung der Nocken 15 beim Verdrehen. Eine bessere Festlegung der in Fig. 12 dargestellten verriegelten Endposition ergibt sich durch leichte radiale rippenartige Vorsprünge 31 an den ansonsten zylindrischen Flächen 30, die man in den Fig. 7, 9 und 10 erkennen kann. Da die Nocken 15 in der verriegelten Position in den Umfangsnuten 15b (siehe Fig. 2a) liegen, ist ein Entriegeln nur möglich, indem man das Überwurfelement 11 zunächst in Gegenrichtung verdreht, bis die axialen Nuten 15a erreicht sind, um dann das Überwurfelement 11 gegenüber dem Sockel 12 zu verschieben.

### Bezugszeichenliste

- 10: Thermostatkopf
- 11: Überwurfelement
- 12: Sockel
- 13: heizkörperseitige Armatur
- 14: endseitiger Abschnitt des Sockels
- 15: Nocken am Überwurfelement
- 15a: Nuten
- 15b: Umfangsnuten
- 16: angeformte Zungen des Sockels
- 17: Fußteile des Sockels
- 18: Anformungen an den Fußteilen
- 19: Spannbund
- 19a: Bereich
- 20: Anzeigemarke
- 21: Bund
- 22: Rippen

## Patentansprüche

1. Thermostatregler für Heizkörperventile umfassend einen Thermostatkopf und einem an einer heizkörperseitigen Armatur drehfest montierbaren Sockel, wobei der Thermostatkopf als Griff ausgebildet und gegenüber dem Sockel zur Einstellung einer gewünschten Temperatur verdrehbar angeordnet ist, wobei die Befestigung des Sockels an der heizkörperseitigen Armatur mittels eines Überwurfelements erfolgtund wobei zur Festlegung des Sockels (12) an der heizkörperseitigen Armatur mittels des Überwurfelements (11) eine gewindelose Verbindung zwischen Überwurfelement und Sockel vorgesehen ist
**dadurch gekennzeichnet,**
**dass** zur Festlegung des Sockel's (12) an der heizkörperseitigen Armatur (13) zunächst eine Axialverschiebung des Überwurfelements (11), vorzugsweise in Richtung auf das Sockelende und anschließend eine Drehung des Überwurfelements (11) erforderlich ist.

2. Thermostatregler für Heizkörperventile nach Anspruch 1,
**dadurch gekennzeichnet, dass** das Überwurfelement (11) als gewindeloser Ring ausgebildet ist.

3. Thermostatregler für Heizkörperventile nach Anspruch 1 oder 2,
**dadurch gekennzeichnet, dass** das Überwurfelement (11) auf einem endseitigen Abschnitt (14) des Sockels (12) zur Festlegung des Sockels an der heizkörperseitigen Armatur (13) axial verschiebbar ist.

4. Thermostatregler für Heizkörperventile nach einem der Ansprüche 1 bis 3, **dadurch gekennzeichnet, dass** das Überwurfelement (11) zur Festlegung des Sockels an der heizkörperseitigen Armatur auf einem endseitigen Abschnitt (14) des Sockels verdrehbar, vorzugsweise um einen Bruchteil einer vollständigen Umdrehung verdrehbar ausgebildet ist.

5. Thermostatregler für Heizkörperventile nach einem der Ansprüche 1 bis 4, **dadurch gekennzeichnet, dass** das Überwurfelement (11) innenliegende Führungselemente (15) aufweist, die in Nuten (15a, 15b) des Sockels (12) geführt sind.

6. Thermostatregler für Heizkörperventile nach einem der Ansprüche 1 bis 5, **dadurch gekennzeichnet, dass** der Sockel (12) mindestens ein angeformtes Fußteil (17) aufweist, welches bei axialer Verschiebung des Überwurfelements (11) eine formschlüssige Verbindung mit der heizkörperseitigen Armatur (13) eingeht.

7. Thermostatregler für Heizkörperventile nach Anspruch 6, **dadurch gekennzeichnet, dass** wenigstens ein Fußteil (17) des Sockels (12) mindestens eine Anformung (18) aufweist, die eine formschlüssige Verbindung mit der heizkörperseitigen Armatur eingeht.

8. Thermostatregler für Heizkörperventile nach einem der Ansprüche 1 bis 7, **dadurch gekennzeichnet, dass** das Überwurfelement (11) mindestens ein angeformtes Element (Bund 19) aufweist, welches in einer Verriegelungs-Endposition mindestens einen Abschnitt von Fußteilen (17) des Sockels (12) hintergreift.

9. Thermostatregler für Heizkörperventile nach einem der Ansprüche 1 bis 8, **dadurch gekennzeichnet, dass** sich am Sockel (12) und/oder am Überwurfelement (11) Spannelemente (17, 30) befinden, mittels derer in einer Verriegelungsstellung des Überwurfelements (11) eine spielfreie feste Verbindung zwischen Sockel (12) und heizkörperseitiger Armatur (13) herstellbar ist.

10. Thermostatregler für Heizkörperventile nach einem der Ansprüche 8 oder 9, **dadurch gekennzeichnet, dass** am Überwurfelement (11) und/oder Sockel (12) Elemente (31) vorgesehen sind für eine Festlegung des Überwurfelements (11) in einer verdrehten Verriegelungsposition.

11. Thermostatregler für Heizkörperventile nach einem der Ansprüche 1 bis 10, **dadurch gekennzeichnet, dass** als Führungselemente an dem Überwurfelement (11) angeformte innenseitig radial vorstehende Nocken (15) dienen.

12. Thermostatregler für Heizkörperventile nach einem der Ansprüche 1 bis 11, **dadurch gekennzeichnet, dass** zur Führung von Nocken (15) des Überwurfelements am Sockel mindestens eine axiale Nut (15a) und mindestens eine Umfangsnut (15b) ausgebildet ist.

## Claims

1. Thermostatic controller for radiator valves comprising a thermostat head and a socket which can be mounted in a rotationally fixed manner on a radiator-side fitting, the thermostat head being configured as a knob and being arranged such that it can be rotated with respect to the socket in order to set a desired temperature, the socket being fastened to the radiator-side fitting by means of a coupling element, and a threadless connection between the coupling element and the socket being provided in order to fix the socket (12) on the radiator-side fitting by means of the coupling element (11), **characterized in that**, in order to fix the socket (12) on the radiator-side fitting (13), first of all an axial displacement of the coupling element (11), preferably in the direction of the socket end, and subsequently a rotation of the coupling element (11) are required.

2. Thermostatic controller for radiator valves according to Claim 1, **characterized in that** the coupling element (11) is configured as a threadless ring.

3. Thermostatic controller for radiator valves according to Claim 1 or 2, **characterized in that** the coupling element (11) can be displaced axially on an end-side section (14) of the socket (12) in order to fix the socket on the radiator-side fitting (13).

4. Thermostatic controller for radiator valves according to one of Claims 1 to 3, **characterized in that** the coupling element (11) is configured such that it can be rotated on an end-side section (14) of the socket, preferably such it can be rotated by a fraction of one complete revolution, in order to fix the socket on the radiator-side fitting.

5. Thermostatic controller for radiator valves according to one of Claims 1 to 4, **characterized in that** the coupling element (11) has guide elements (15) lying on the inner side and are guided in grooves (15a, 15b) of the socket (12).

6. Thermostatic controller for radiator valves according to one of Claims 1 to 5, **characterized in that** the socket (12) has at least one integrally formed base part (17) which enters into a positively locking connection with the radiator-side fitting (13) upon axial displacement of the coupling element (11).

7. Thermostatic controller for radiator valves according to Claim 6, **characterized in that** at least one base part (17) of the socket (12) has at least one moulded projection (18) which enters into a positively locking connection with the radiator-side fitting.

8. Thermostatic controller for radiator valves according to one of Claims 1 to 7, **characterized in that** the coupling element (11) has at least one integrally formed element (collar 19) which engages behind at least one section of base parts (17) of the socket (12) in a locked end position.

9. Thermostatic controller for radiator valves according to one of Claims 1 to 8, **characterized in that** clamping elements (17, 30) are situated on the socket (12) and/or on the coupling element (11), by means of which clamping elements (17, 30) a play-free fixed connection can be produced between the socket (12) and radiator-side fitting (13) in a locked position of the coupling element (11).

10. Thermostatic controller for radiator valves according to either of Claims 8 and 9, **characterized in that** elements (31) are provided on the coupling element (11) and/or socket (12) for fixing the lock-bush element (11) in a rotated locked position.

11. Thermostatic controller for radiator valves according to one of Claims 1 to 10, **characterized in that** cams (15) which are formed integrally on the coupling element (11) and project radially on the inside serve as guide elements.

12. Thermostatic controller for radiator valves according to one of Claims 1 to 11, **characterized in that** at least one axial groove (15a) and at least one circumferential groove (15b) are formed on the socket in order to guide cams (15) of the coupling element.

## Revendications

1. Régulateur thermostatique pour vannes de radiateurs, comprenant une tête thermostatique et un socle pouvant être monté de manière solidaire en rotation sur un robinet du côté du radiateur, la tête thermostatique étant réalisée sous forme de poignée et étant disposée de manière à pouvoir tourner par rapport au socle en vue d'ajuster une température souhaitée, la fixation du socle sur le robinet du côté du radiateur s'effectuant au moyen d'un élément d'accouplement et une connexion sans filetage entre l'élément d'accouplement et le socle étant prévue pour fixer le socle (12) sur le robinet du côté du radiateur au moyen de l'élément d'accouplement (11),
**caractérisé en ce que**
pour la fixation du socle (12) sur le robinet (13) du côté du radiateur, un déplacement axial de l'élément d'accouplement (11), de préférence dans la direction de l'extrémité du socle, étant d'abord nécessaire, suivi par une rotation de l'élément d'accouplement (11).

2. Régulateur thermostatique pour vannes de radiateurs selon la revendication 1, **caractérisé en ce que** l'élément d'accouplement (11) est réalisé sous forme de bague sans filetage.

3. Régulateur thermostatique pour vannes de radiateurs selon la revendication 1 ou 2, **caractérisé en ce que** l'élément d'accouplement (11) peut être déplacé axialement sur une portion (14) du côté de l'extrémité du socle (12) en vue de fixer le socle sur le robinet (13) du côté du radiateur.

4. Régulateur thermostatique pour vannes de radiateurs selon l'une quelconque des revendications 1 à 3, **caractérisé en ce que** l'élément d'accouplement (11) est réalisé de manière à pouvoir être tourné pour fixer le socle au robinet du côté du radiateur sur une portion (14) du côté de l'extrémité du socle, de préférence de manière à pouvoir être tourné suivant une fraction d'une rotation complète.

5. Régulateur thermostatique pour vannes de radiateurs selon l'une quelconque des revendications 1 à 4, **caractérisé en ce que** l'élément d'accouplement (11) présente des éléments de guidage internes (15) qui sont guidés dans des rainures (15a, 15b) du socle (12).

6. Régulateur thermostatique pour vannes de radiateurs selon l'une quelconque des revendications 1 à 5, **caractérisé en ce que** le socle (12) présente au moins une partie de base façonnée (17), qui, lors du déplacement axial de l'élément d'accouplement (11), entre en liaison par engagement positif avec le robinet (13) du côté du radiateur.

7. Régulateur thermostatique pour vannes de radiateurs selon la revendication 6, **caractérisé en ce qu'**au moins une partie de base (17) du socle (12) présente au moins une partie façonnée (18) qui entre en liaison par engagement positif avec le robinet du côté du radiateur.

8. Régulateur thermostatique pour vannes de radiateurs selon l'une quelconque des revendications 1 à 7, **caractérisé en ce que** l'élément d'accouplement (11) présente au moins un élément façonné (épaulement 19), qui, dans une position d'extrémité de verrouillage, vient en prise par l'arrière avec au moins une portion de parties de base (17) du socle (12).

9. Régulateur thermostatique pour vannes de radiateurs selon l'une quelconque des revendications 1 à 8, **caractérisé en ce que** des éléments de serrage (17, 30) sont situés sur le socle (12) et/ou sur l'élément d'accouplement (11), au moyen desquels éléments de serrage une connexion fixe et sans jeu peut être établie entre le socle (12) et le robinet (13) du côté du radiateur dans une position de verrouillage de l'élément d'accouplement (11).

10. Régulateur thermostatique pour vannes de radiateurs selon l'une quelconque des revendications 8 ou 9, **caractérisé en ce que** des éléments (31) sont prévus sur l'élément d'accouplement (11) et/ou sur le socle (12) pour une fixation de l'élément d'accouplement (11) dans une position de verrouillage tournée.

11. Régulateur thermostatique pour vannes de radiateurs selon l'une quelconque des revendications 1 à 10, **caractérisé en ce que** des cames (15) saillant radialement du côté intérieur, façonnées sur l'élément d'accouplement (11), servent d'éléments de guidage.

12. Régulateur thermostatique pour vannes de radiateurs selon l'une quelconque des revendications 1 à 11, **caractérisé en ce que** pour le guidage des cames (15) de l'élément d'accouplement sur le socle, au moins une rainure axiale (15a) et au moins une rainure périphérique (15b) sont réalisées.
